# EUROPÄISCHE PATENTSCHRIFT

(11) **EP 0 571 643 B1**
(45) Veröffentlichungstag und Bekanntmachung des Hinweises auf die Patenterteilung: **01.05.1996**
(21) Anmeldenummer: 92108335.8
(22) Anmeldetag: 18.05.1992
(51) Int. Cl.: H02J 3/18, G05F 1/70

(54) **Verfahren und Vorrichtung zur symmetrischen Aussteuerung einer gesteuerten Serienkompensationsanlage**
Method and device for symmetrical control of a series compensator installation
Procédé et dispositif de commande symétrique d'une installation de compensation série

(43) Veröffentlichungstag der Anmeldung: 01.12.1993
(73) Patentinhaber: SIEMENS AKTIENGESELLSCHAFT, D-80333 München (DE)
(72) Erfinder: Leowald, Karl-Friedrich, Dipl.-Ing., W-8525 Weiher (DE); Weiss, Stephan, Dipl.-Ing., W-8525 Uttenreuth (DE)

(56) Entgegenhaltungen:
- WO-A-87/04538
- DE-A- 3 802 677
- DE-A- 3 915 213
- DR.-ING. LEONHARD M]LLER 'Reihenkondensatoren in Elektrischen Netzen' 1967 , TECHNISCHER VERLAG RESCH KG , GR FELFING/M NCHEN DE

## Beschreibung

Die Erfindung bezieht sich auf ein Verfahren und eine Vorrichtung zur symmetrischen Aussteuerung einer gesteuerten Serienkompensationsanlage in elektrischen Netzen.

Bei der Reihenkompensation werden üblicherweise Kondensatoren im Leitungszug eingesetzt, um den stromabhängigen Spannungsabfall auf der Leitung und den Übertragungswinkel in Stufen zu vermindern. Es handelt sich dabei um Kondensatorbänke, die als Ganzes oder in mehreren Teilkondensatoren (Segmenten) in Reihe zu- und abgeschaltet werden. Das Zu- und Abschalten des Kondensators geschieht dadurch, daß ein paralleler Leistungsschalter geöffnet bzw. geschlossen wird. Der Schutz des Kondensators bei Netzkurzschluß wird durch einen parallelen Ableiter, durch eine triggerbare Funkenstrecke und/oder durch den parallelen Leistungsschalter gewährleistet.

Des weiteren ist eine Reihenkompensationsanlage bekannt, bei der durch eine zum Kondensator parallel geschaltete Drossel die Gesamtimpedanz dieses Reihenkompensators (ähnlich wie beim TCR (Thyristor Controlled Reactor) im statischen Kompensator) mit einem Stromrichterventil auf Hochspannungspotential stufenlos geregelt wird durch entsprechendes Zünden. Eine derartig gesteuerte Serienkompensation ist bekannt unter dem Begriff ASC (Advanced Series Compensation). Mit einem derartigen gesteuerten Serienkompensator kann die Dynamik der Reihenkompensation verbessert werden und die Gesamtimpedanz ist in einem gewissen Bereich regelbar, wobei die Impedanz von kapazitiv bis induktiv verändert werden kann.

Derartige Reihenkompensatoren sind im Aufsatz "Geregelte Parallel- und Reihenkompensation", abgedruckt in der DE-Zeitschrift "Elektrie", Band 45, 1991, März, Seiten 88 bis 90, vorgestellt. Außerdem ist ein derartiger gesteuerter Reihenkompensator, der in eine Übertragungsleitung integriert ist, in der internationalen Patentschrift WO 87/04538 beschrieben.

Eine gesteuerte Serienkompensationsanlage wird, entsprechend seiner Anwendung in serienkompensierten Höchstspannungsnetzen, stets dreiphasig ausgeführt. Seine Hauptaufgaben sind: Leitungsstrombeeinflussung (Lastflußmanipulation) , Busspannungsbeeinflussung, Dämpfung von Leitungspendelungen. Diese Aufgaben können mit einer gleichartigen Aussteuerung der drei Zweige der gesteuerten Serienkompensationsanlage erfüllt werden. Die Zündwinkel in diesen drei Zweigen sind dann gleich. Ein den Zweigen der gesteuerten Serienkompensationsanlage gemeinsame Regler benötigt einen Istwert, der nach einer von der Regelaufgabe bestimmten Prozedur aus drei, eventuell ungleich großen Meßwerten ermittelt wird. Dies kann das Eliminieren oder Begrenzen stark abweichender Einzelmeßwerte, wie sie bei unsymmetrischen Netzverhältnissen vorkommen können, einschließen.

Gehört zusätzlich die Vergleichmäßigung der Leitungsstrom- oder spannungsamplituden (Grundschwingung) zur Aufgabe, so kann dies so gelöst werden, daß für jeden Zweig ein eigener Regelkreis gebildet wird. Es kann dann aber zu sehr unterschiedlicher Aussteuerung in den Zweigen kommen (z.B. bei unsymmetrischen Netzfehlern). Dies hat folgende Nachteile:
- Für jede Leitung kann eine andere Impedanz eingestellt werden; damit ist der Kompensationsgrad nicht in allen drei Leitungen eines Netzes gleich.
- Die Komponenten der gesteuerten Serienkompensationsanlage, insbesondere die Kondensatorbank, werden unterschiedlich belastet; die am stärksten belastete Kondensatorbank bestimmt, wann aus Schutzgründen die gesamte Kompensationsanlage gesperrt wird.

Die deutsche Offenlegungsschrift DE-A-3802677 beschäftigt sich mit dem Problem bei unsymmetrischer Blindleistungsverteilung in den Strängen des Netzes eine Kompensationsanlage "so einzustellen, daß der Regelbereich voll genutzt aber nicht überschritten wird". Dazu offenbart die Schrift ein Verfahren zur Modifikation der Leistungssollwerte einer dynamischen Blindleistungs-Kompensationsanlage zur Optimierung des Betriebsverhaltens der Gesamtanordnung sowie zur Vermeidung von Fehlfunktionen bei extremen Anforderungen".

Hierzu wird aus den einzelnen Strangleistungen ein Blindleistungsmittelwert gebildet, der wiederum zur Bildung eines bewerteten Blindleistungsmittelwertes und von Strang-Differenz-Blindleistungen verwendet wird. Daraus werden die Sollwerte für die Strangblindleistungen gebildet.

Der Erfindung liegt nun die Aufgabe zugrunde, ein Verfahren und eine Vorrichtung anzugeben, wodurch die erwähnten Nachteile vermieden werden.

Diese Aufgabe wird erfindungsgemäß gelöst durch die Verfahrensschritte des Anspruchs 1 und durch die kennzeichnenden Merkmale des Anspruchs 2.

Dadurch, daß die Streuung der Impedanz der gesteuerten Serienkompensationsanlage begrenzt wird, können die erwähnten Nachteile, die bei der Leitungsstrom-Regelung der Phasen eines Netzes auf einen Leitungsstrom-Sollwert entstehen können, vermieden werden. Die Begrenzungswerte werden so eingestellt, daß ein Ausregeln einer kleinen Unsymmetrie in der Aussteuerung von bis zu wenigen Prozent noch ausgeregelt werden können. Dazu wird eine Impedanz-Referenzstellgröße aus den Ausgangsgrößen (Impedanz-Stellgrößen) der Leitungsstrom-Regelung bestimmt. Einer dieser drei Impedanz-Stellgrößen wird als Referenzstellgröße derart ausgewählt, daß die Impedanz-Referenzstellgröße größer gleich der kleinsten und zugleich auch kleiner gleich der größten Impedanz-Stellgröße ist. Aus dieser ermittelten Impedanz-Referenzstellgröße wird mittels einer Addition bzw. Subtraktion einer vorbestimmten positiven bzw. negativen Abweichung ein oberer bzw. unterer Grenzwert festgelegt.

Somit werden die aus einer Leitungsstrom-Regelung bereitgestellten Impedanz-Stellgrößen, die sehr unterschiedlich sein können, auf die sich ändernden Grenzwerte begrenzt, wodurch den Steuersätzen Zündwinkelsignale zugeführt werden, die eine symmetrische Aussteuerung zur Folge haben.

Stärkere Unsymmetrien, die beispielsweise aufgrund eines einpoligen Netzfehlers auftreten, werden nur entsprechend einer vorbestimmten Unsymmetrie (positive bzw. negative Abweichung) ausgeglichen. Dieses Zusatzverfahren und die entsprechende Zusatzeinrichtung hilft mittels der ermittelten Begrenzung unnötige Regelausschläge bei den im allgemeinen nur kurz andauernden Netzfehlern zu vermeiden.

Dieses Verfahren zur symmetrischen Aussteuerung der gesteuerten Serienkompensationsanlage bewahrt diese Anlage auch vor Fehlbedienung einer Bedienperson, die von Hand den Wert der Impedanz der Anlage einstellt.

Bei einer vorteilhaften Ausführungsform der Vorrichtung zur Durchführung des erfindungsgemäßen Verfahrens zur symmetrischen Aussteuerung einer gesteuerten Serienkompensationsanlage in elektrischen Netzen ist die Einrichtung zur Erzeugung von Zündwinkelsignalen aus den Leitungsströmen und eines Leitungsstrom-Sollwertes ein Mikrocomputer. Dadurch sind die Stromregler dieser Vorrichtung als Abtastregler dieses Mikrocomputers ausgeführt und in jeder Abtastperiode wird eine Vielzahl von Funktionsblöcken nacheinander in stets gleicher Reihenfolge bearbeitet.

Da als Steuer- und Regeleinrichtung einer gesteuerten Serienkompensationsanlage vorzugsweise ein digitales mikroprozessorgestütztes Reglersystem vorgesehen ist, besteht die Vorrichtung zur Durchführung des erfindungsgemäßen Verfahrens in der Programmierung eines Programms zur symmetrischen Aussteuerung der gesteuerten Serienkompensationsanlage.

Zur weiteren Erläuterung des erfindungsgemäßen Verfahrens und der erfindungsgemäßen Vorrichtung zur symmetrischen Aussteuerung einer gesteuerten Serienkompensationsanlage wird auf die Zeichnung Bezug genommen, in der ein Ausführungsbeispiel einer Vorrichtung zur Durchführung des erfindungsgemäßen Verfahrens schematisch veranschaulicht ist.
- Figur 1: zeigt eine gesteuerte Serienkompensationsanlage mit einer Vorrichtung zur symmetrischen Aussteuerung dieser Anlage und in
- Figur 2: ist ein Blockschaltbild einer Auswahleinrichtung der Vorrichtung nach Figur 1 näher dargestellt.

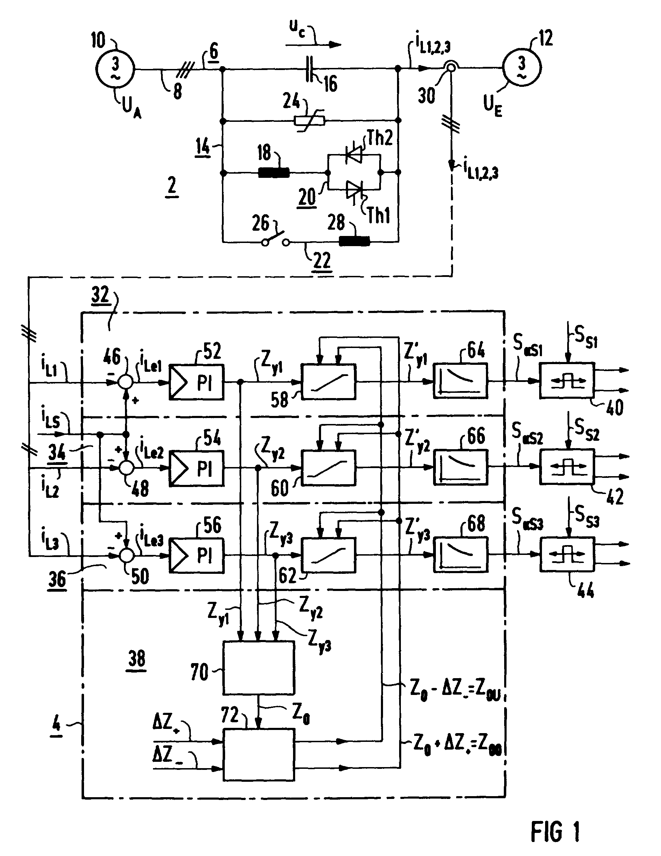

Die Figur 1 zeigt ein Ersatzschaltbild einer gesteuerten Serienkompensationsanlage 2 mit einer Vorrichtung 4 zur symmetrischen Aussteuerung dieser Serienkompensationsanlage 2. Die gesteuerte Serienkompensationsanlage 2 ist in einem dreiphasigen Netz 6 integriert, das aus drei Übertragungsleitungen 8 besteht, die am Anfang und am Ende jeweils mit einer Spannungsquelle 10 und 12 versehen sind. Die Spannungen U_{A} und U_{E} der Spannungsquellen 10 und 12 unterscheiden sich in der Amplitude um einen Leistungsspannungsabfall ΔU und in einem Spannungsverdrehwinkel ϑ.

Die gesteuerte Serienkompensationsanlage 2 ist, wie das Netz 6, auch dreiphasig ausgeführt, d.h., die Anlage 2 besteht aus drei gesteuerten Serienkompensatoren 14, von denen hier wegen der übersichtlichkeit nur einer näher dargestellt ist. Die gesteuerte Serienkompensation ist auch als ASC (Advanced Series Compensation) bekannt. Dabei ist jeweils ein gesteuerter Serienkompensator 14 in eine Übertragungsleitung 8 des Netzes 6 integriert. Dies geschieht in den meisten Fällen im Zuge der Leitung 8, erfolgt aber auch am Ausgang bzw. Eingang von Schaltstationen.

Der Aufbau eines gesteuerten Serienkompensators 14 kann in drei Bereiche unterteilt werden. Der Kern eines solchen Kompensators 14 besteht aus einem Serienkondensator 16, welcher in einer Übertragungsleitung 8 seriell integriert ist. Hiermit erreicht man eine Kompensation der induktiven Längsimpedanz der Leitung 8, welche für den induktiven Blindleistungsanteil verantwortlich ist. Parallel wird bei einem gesteuerten Serienkompensator 14 ein Zweig, bestehend aus einer Spule 18 und einem Stromrichterventil 20, hinzugeschaltet. Als Stromrichterventil 20 ist eine Parallelschaltung zweier Thyristorventile Th1 und Th2 dargestellt, die antiparallel zueinander angeordnet sind. Mittels dieser beiden Thyristorventile Th1 und Th2 kann die Spule 18 zu vorbestimmten Zeitpunkten für die positive und negative Halbwelle der Kondensatorspannung u_{C} eingeschaltet werden. Anstelle der Thyristorventile Th1 und Th2 können auch andere Halbleiterventile, beispielsweise GTO-Thyristoren (Gate-turn-off-Thyristoren) verwendet werden. Der Aufbau eines Thyristorventils für Blindstromkompensation ist im Aufsatz "Stromrichter für statische Blindstromkompensation" abgedruckt in der DE-Zeitschrift "Siemens-Energietechnik", Band 3 (1981), Heft 11 bis 12, Seiten 353 bis 357. Mittels des Zweiges besteht die Möglichkeit, durch eine Phasenanschnittsteuerung die wirksame Impedanz des gesteuerten Serienkompensators 14 kontinuierlich kapazitiv und induktiv zu verändern. Dadurch kann man neben der Erhöhung der Übertragungsleistung auch noch im Fehlerfall auf der Leitung 8 einen Kurzschlußstrom begrenzen. Die aufgezählten Vorteile beim Einsatz von Reihenkondensatoren, die im Lehrbuch "Reihenkondensatoren in elektrischen Netzen", von Dr.-Ing. Leonhard Müller, 1967, Seite 4, gelten auch für einen gesteuerten Serienkompensator 14.

Zum Schutz des Serienkondensators 16, der Spule 18 und des Stromrichterventils 20 vor Überlastungen durch zu hohe Leitungsströme i_{L} sind parallel zu diesen Elementen 16 oder 18 und 20 ein Nebenweg 22 (Bypass) und ein nichtlinearer Widerstand 24, auch Ableiter genannt, eingebaut. Als nichtlinearer Widerstand 24 ist beispielsweise ein Metalloxid-Varistor (MOV) vorgesehen. Dieser elektrisch parallel zum Serienkondensator 16 geschaltete Metalloxid-Varistor 24 ist so dimensioniert, daß bei einer vorbestimmten Spannungsamplitude dieser Ableiter 24 sehr schnell die Stromführung übernimmt und somit den Serienkondensator 16 vor länger andauernden Überlastzuständen schützt. Das Energieaufnahmevermögen eines nichtlinearen Widerstandes 24 ist aufgrund wirtschaftlicher Überlegungen natürlich begrenzt und somit benötigt ein Serienkompensator 14 auch die Möglichkeit, den Serienkondensator 16 mit seinem Ableiter 24 vor Überlastungen zu schützen. Diese Aufgabe wird von dem parallelen Nebenweg 22 übernommen. Dieser Bypass 22 besteht aus einem Bypass-Schalter 26 und aus einem Dämpfungskreis 28. Der Bypass-Schalter 26 wird geschlossen, sobald die Belastung, d.h. das Energieaufnahmevermögen des Ableiters 24, erschöpft ist.

Mittels einer Einrichtung 30 werden jeweils in einer Übertragungsleitung 8 des Netzes 6 ein Leitungsstrom i_{L1},i_{L2} bzw. i_{L3} gemessen. Diese gemessenen Leitungsströme i_{L1},i_{L2}, i_{L3} werden über ein Lichtleitersystem potentialfrei von der auf Hochspannungspotential befindlichen Anlage 2 zur Vorrichtung 4 zur symmetrischen Aussteuerung der Anlage 2 geführt, die auf Erdpotential ist. Diese potentialfreie Übertragung der Leitungsströme i_{L1},i_{L2} und i_{L3} ist durch eine unterbrochene Linie dargestellt.

Der übertragene Leitungsstrom i_{L1} bzw. i_{L2} bzw. i_{L3} wird einem Steuer- und Regelkanal 32 bzw. 34 bzw. 36 der Vorrichtung 4 zugeführt. Diese Vorrichtung 4 zur symmetrischen Aussteuerung enthält außerdem eine Einrichtung 38 zur Bestimmung von einem oberen und unteren Grenzwert Z_{OO} und Z_{OU}. Jedem Steuer- und Regelkanal 32, 34 und 36 ist ein Steuersatz 40, 42 und 44 nachgeschaltet. Jeder Steuersatz 40, 42 und 44 erzeugt aus einem Synchronisiersignal S_{S1},S_{S2} und S_{S3} und einem Zündwinkelsignal S_{αS1},S_{αS2} und S_{αS3}, die von den Steuer- und Regelkanälen 32, 34 und 36 generiert werden, Zündsignale für das Stromrichterventil 20 der Serienkompensatoren 14 der Anlage 2.

Der Steuer- und Regelkanal 32 bzw. 34 bzw. 36 besteht aus einem Vergleicher 46 bzw. 48 bzw. 50 mit nachgeschaltetem Stromregler 52 bzw. 54 bzw. 56, dessen Ausgang über einen Begrenzer 58 bzw. 60 bzw. 62 mit einem Kennliniengeber 64 bzw. 66 bzw. 68 verknüpft ist. Am negativen Eingang des Vergleichers 46 bzw. 48 bzw. 50 steht das Leitungssignal i_{L1} bzw. i_{L2} bzw. i_{L3} an, wogegen jeweils am positiven Eingang der Vergleicher 46, 48 und 50 ein Leitungsstrom-Sollwert i_{LS} ansteht. Der Stromregler 52 bzw. 54 bzw. 56, der ein Proportional-Integral-Regler (PI-Regler) sein kann, erzeugt aus der ermittelten Leitungsstrom-Regeldifferenz i_{Le1} bzw. i_{Le2} bzw. i_{Le3} eine Impedanz-Stellgröße Z_{y1} bzw. Z_{y2} bzw. Z_{y3}. Die am Ausgang des Begrenzers 58 bzw. 60 bzw. 62 anstehende Impedanz-Stellgröße Z'_{y1} bzw. Z'_{y2} bzw. Z'_{y3} wird mittels des Kennliniengebers 64 bzw. 66 bzw. 68 in ein Zündwinkelsignal S_{αS1} bzw. S_{αS2} bzw. S_{αS3} gewandelt.

Da die gemessenen Leitungsströme i_{L1}, i_{L2} und i_{L3} in Abhängigkeit der Phasenbelastung unterschiedlich groß sein können, sind die erzeugten Impedanz-Stellgrößen Z_{y1}, Z_{y2} und Z_{y3} auch unterschiedlich. Dies hat zur Folge, daß die Serienkompensatoren 14 der Anlage 2 unsymmetrisch ausgesteuert werden. Dies hat zur Folge, daß der Kompensationsgrad in allen drei Zweigen der gesteuerten Serienkompensationsanlage 2 nicht gleich sind. Außerdem werden die Serienkondensatoren 16 unterschiedlich belastet, wodurch die Anlage 2 infolge eines besonders stark belasteten Serienkondensators 16 abgeschaltet wird.

Diese Nachteile können beseitig werden, wenn die Streuung der erzeugten Impedanz-Stellgrößen Z_{y1}, Z_{y2} und Z_{y3} begrenzt werden. Die Begrenzungswerte Z_{OO} und Z_{OU} sollen so bestimmt werden, daß ein Ausregeln einer kleinen Unsymmetrie von einigen Prozent bis zu etwa 10 % noch möglich ist. Stärkere Unsymmetrien, beispielsweise aufgrund von einseitigen Netzfehlern werden nicht mehr voll ausgeglichen. Durch eine derartige Begrenzung werden unnötige Regelausschläge bei den im allgemeinen nur kurz andauernden Netzfehlern vermieden.

Zur Berechnung derartiger Begrenzungswerte Z_{OO} und Z_{OU} wird eine Impedanz-Referenzstellgröße Z_{O} und eine positive bzw. negative Abweichung ΔZ₊ bzw.ΔZ₋ gebraucht. Die positive und negative Abweichung ΔZ₊ und ΔZ₋ sind voneinander unabhängig. Ihre Größe ist entweder fest vorgegeben oder sie wird in Abhängigkeit vom Betriebszustand der gesteuerten Serienkompensationsanlage 2 oder von Ereignissen im Netz 6 verändert.

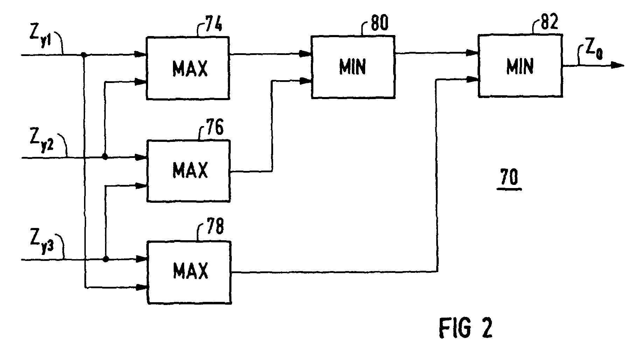

Die Impedanz-Stellgröße Z_{O} wird mit Hilfe der erzeugten Impedanz-Stellgrößen Z_{y1}, Z_{y2} und Z_{y3} gebildet. Dabei werden die Impedanz-Stellgrößen Z_{y1}, Z_{y2} und Z_{y3} einer Auswahleinrichtung 70 zugeführt, an dessen Ausgang die Impedanz-Referenzstellgröße Z_{O} ansteht. Der Auswahleinrichtung 70, deren Aufbau in Figur 2 näher dargestellt ist, ist eine Einrichtung 72 zur Berechnung des oberen und unteren Begrenzungswertes Z_{OO} und Z_{OU} nachgeschaltet. Dieser Einrichtung 72 sind noch eine positive und eine negative Abweichung ΔZ₊ und ΔZ₋ zugeführt.

Der Begrenzungswert Z_{OO} bzw. Z_{OU} wird durch Addition bzw. Subtraktion der positiven bzw. negativen Abweichung ΔZ₊ bzw. ΔZ₋ zum bzw. vom Impedanz-Referenzstellwert Z₀ berechnet. Diese Begrenzungswerte Z₀₀ und Z_{0U} werden jeweils einem Begrenzer 58, 60 und 62 zugeführt. Dadurch kann an den Ausgängen der Begrenzer 58, 60 und 62 höchstens als Impedanz-Stellgröße Z'_{y1}, Z'_{y2} und Z'_{y3} die obere Begrenzungsgröße Z₀₀ und wenigstens als Impedanz-Stellgröße Z'_{y1}, Z'_{y2} und Z'_{y3} die untere Begrenzungsgröße Z_{OU} anstehen, unabhängig von der Streuung der Impedanz-Stellgrößen Z_{y1}, Z_{y2} und Z_{y3}. Somit erreicht man eine symmetrische Aussteuerung der gesteuerten Serienkompensationsanlage 2, wodurch die aufgezeigten Nachteile vermieden werden. Außerdem wird der Kompensationsgrad in allen drei Zweigen der Anlage 2 gleich, wodurch sich die Verfügbarkeit dieser Anlage erhöht.

Die Figur 2 zeigt den näheren Aufbau der Auswahleinrichtung 70 nach Figur 1 als Blockschaltbild. Eingangsseitig weist diese Auswahleinrichtung 70 drei Maximalauswahlschaltungen 74, 76 und 78 und ausgangsseitig zwei Minimalauswahlschaltungen 80 und 82 auf. Die Impedanz-Stellgröße Z_{y1} ist einem ersten Eingang der ersten Maximalauswahlschaltung 74 und einem zweiten Eingang der dritten Maximalauswahlschaltung 78 zugeführt. Die Impedanz-Stellgröße Z_{y2} des Steuer- und Regelkanals 34 ist einerseits einem ersten Eingang der zweiten Maximalauswahlschaltung 76 und einem zweiten Eingang der ersten Maximalauswahlschaltung 74 zugeführt. Die Impedanz-Stellgröße Z_{y3} ist einerseits einem ersten Eingang der dritten Maximalauswahlschaltung 78 und einem zweiten Eingang der zweiten Maximalauswahlschaltung 76 zugeführt. Die Ausgänge der ersten und der zweiten Maximalauswahlschaltung 74 und 76 sind mit den Eingängen einer ersten Minimalauswahlschaltung 80 verbunden, deren Ausgang mit einem Eingang der nachgeschalteten Minimalauswahlschaltung 82 verknüpft ist. Der zweite Eingang dieser Minimalauswahlschaltung 82 ist mit dem Ausgang der dritten Maximalauswahlschaltung 78 verknüpft.

Unter der Voraussetzung, daß beispielsweise Z_{y1}<Z_{y2}<Z_{y3}, stehen am Ausgang der ersten Maximalauswahlschaltung 74 die Impedanz-Stellgröße Z_{y2}, am Ausgang der zweiten Maximalauswahlschaltung 76 die Impedanz-Stellgröße Z_{y3} und am Ausgang der dritten Maximalauswahlschaltung 78 die Impedanz-Stellgröße Z_{y3} an. Am Ausgang der ersten Minimalauswahlschaltung 80 steht dann die Impedanz-Stellgröße Z_{y2} und am Ausgang der zweiten Minimalauswahlschaltung 82 steht dann die ImpedanzStellgröße Z_{y2}, die als Impedanz-Referenzstellgröße Z_{O} der Einrichtung 72 zur Berechnung der Begrenzungswerte Z_{OO} und Z_{OU} zugeführt wird. Mittels dieser Auswahleinrichtung 70 besteht die Möglichkeit, aus drei unterschiedlichen Impedanz-Stellgrößen Z_{y1}, Z_{y2} und Z_{y3} diejenige Impedanz-Stellgröße als Impedanz-Refenzstellgröße Z_{O} herauszuwählen, die größer gleich der kleinsten und kleiner gleich der größen Stellgröße ist. D.h. , immer eine der drei Impedanz-Stellgrößen Z_{y1}, Z_{y2} und Z_{y3} wird als Referenzstellgröße Z_{O} zur Berechnung der Begrenzungswerte Z_{OO} und Z_{OU} verwendet.

Von den so begrenzten Impedanz-Stellgrößen für die drei Serienkompensatoren 14 der gesteuerten Serienkompensationsanlage 2 befindet sich mindestens einer im Wertebereich zwischen den Begrenzungswerten Z_{OO} und Z_{OU}. Je nach Größe der auszuregelnden Symmetrie befindet sich die andere Impedanz-Stellgrößen auch im Wertebereich zwischen den Begrenzungswerten Z_{OO} und Z_{OU} oder sie nehmen die Begrenzungswerte Z_{OO} oder Z_{OU} an.

Bei einer vorteilhaften Ausgestaltung der Vorrichtung 4 ist diese Vorrichtung 4 mittels eines Mikrocompters realisiert, der in jeder Abtastperiode eine Vielzahl von Funktionsblöcken ken nacheinander in stets gleicher Reihenfolge bearbeitet. Dadbei sind die Stromregler 52, 54 und 56 als Abtastregler ausgeführt.

## Patentansprüche

1. Verfahren zur Begrenzung von Unsymmetrien bei in Abhängigkeit von Leitungsströmen (i_{L2},i_{L2},i_{L3}) und eines Leitungsstrom-Sollwertes (i_{LS}) erzeugten Impedanz-Stellgrößen (Z_{y1}, Z_{y2},Z_{y3}) einer gesteuerten Serienkompensationsanlage (2) in einem elektrischen Netz (6), die als Zündwinkelsignale (S_{αS1},S_{αS2},S_{αS3}) jeweils einem Steuersatz (40,42,44) zugeführt werden, wobei jede Impedanz-Stellgröße (Z_{y1}, Z_{y2}, Z_{y3}) mittels eines oberen und eines unteren Grenzwertes (Z₀₀, Z_{0U}) begrenzt wird, wobei der obere Grenzwert (Z₀₀) mittels einer Addition aus einer Impedanz-Referenzstellgröße (Z_{O}) und einer vorbestimmten positiven Abweichung (ΔZ₊) und der untere Grenzwert (Z_{0U}) mittels einer Subtraktion aus dieser Impedanz-Referenz-Stellgröße (Z₀) und einer vorbestimmten negativen Abweichung (ΔZ₋) ermittelt werden, wobei diese Impedanz-Referenzstellgröße (Z_{O}) aus den erzeugten Impedanz-Stellgrößen ( Z_{y1}, Z_{y2}, Z_{y3}) derart ausgewählt wird, daß die Impedanz- Referenzstellgröße (Z_{O}) einerseits größer gleich der kleinsten und andererseits kleiner gleich der größten erzeugten Impedanz-Stellgröße (Z_{y1}, Z_{y2}, Z_{y3}) ist.

2. Vorrichtung zur Durchführung des Verfahrens zur Begrenzung von Unsymmetrien bei in Abhängigkeit von Leitungsströmen (i_{L2},i_{L2},i_{L3}) und eines Leitungsstrom-Sollwertes (i_{LS}) mittels Stromregler (52,54,56) erzeugter Impedanz-Stellgrößen (Z_{y1},Z_{y2},Z_{y3}) einer gesteuerten Serienkompensationsanlage (2) in einem elektrischen Netz (6) nach Anspruch 1, wobei jede Impedanz-Stellgröße (Z_{y1},Z_{y2},Z_{y3}) mittels eines Kennliniengebers (64,66,68) als Zündwinkelsignal (S_{αS1}, S_{αS2}, S_{αS3}) einem Steuersatz (40,42,44) zugeführt wird, wobei jede Impedanz-Stellgröße (Z_{y1}, Z_{y2},Z_{y3}) über einen Begrenzer (58,60,62) einem Kennliniengeber (64,66,68) zugeführt wird, wobei weitere Begrenzer-Eingänge der Begrenzer (58,60,62) jeweils mit je einem Ausgang einer Einrichtung (72) zur Ermittlung eines oberen und unteren Grenzwertes (Z_{OO},Z_{OU}) verknüpft sind, an deren Bereichs-Eingängen eine positive und negative vorbestimmte Abweichung (ΔZ₊,ΔZ₋) anstehen, und wobei ein Signal-Eingang dieser Einrichtung (72) mit einem Ausgang einer Auswahleinrichtung (70) verbunden ist, an deren Eingänge jeweils eine Impedanz-Stellgröße (Z_{y1}, Z_{y2},Z_{y3}) ansteht.

3. Vorrichtung nach Anspruch 2, wobei die Auswahleinrichtung (70) eingangsseitig aus drei Maximalauswahlschaltungen (74,76,78) und ausgangsseitig aus zwei Minimalauswahlschaltungen (80,82) besteht, wobei der ersten Maximalauswahlschaltung (74) eine erste und eine zweite Impedanz-Stellgröße (Z_{y1},Z_{y2}), der zweiten Maximalauswahlschaltung (76) eine zweite und eine dritte Impedanz-Stellgröße (Z_{y2},Z_{y3}) und der dritten Maximalauswahlschaltung (78) eine dritte und eine erste Impedanz-Stellgröße (Z_{y3},Z_{y1}) zugeführt sind, wobei die Ausgänge der ersten und zweiten Maximalauswahlschaltung (74, 76) eingangsseitig mit der ersten Minimalauswahlschaltung (80) verbunden sind, deren Ausgang wie der Ausgang der dritten Maximalauswahlschaltung (78) eingangsseitig mit der zweiten Minimalauswahlschaltung (82) verknüpft sind.

4. Vorrichtung nach Anspruch 2, wobei die Einrichtung (4) zur Erzeugung von Zündsignalen (S_{αS1},S_{αS2},S_{αS3}) aus den Leitungsströmen (i_{L2},i_{L2},i_{L3}) und eines Leitungsstrom-Sollwertes (i_{LS}) ein Mikrocomputer ist.

## Claims

1. Method for limiting cases of unsymmetry with impedance manipulated variables (Z_{y1}, Z_{y2}, Z_{y3}) of a controlled series compensation system (2), generated in dependence upon conduction currents (i_{L2}, i_{L2}, i_{L3}) and a desired conduction-current value (i_{LS}), in an electrical system (6), which are supplied as ignition angle signals (S_{αS1}, S_{αS2}, S_{αS3}) in each case to a set of trigger equipment (40, 42, 44), with each impedance manipulated variable (Z_{y1}, Z_{y2}, Z_{Y3}) being limited by means of an upper and a lower limiting value (Z_{OO}, Z_{OU}), with the upper limiting value (Z_{OO}) being determined by means of addition from an impedance reference manipulated variable (Z_{O}) and a predetermined positive deviation (ΔZ₊) and the lower limiting value (Z_{OU}) being determined by means of subtraction from this impedance reference manipulated variable (Z_{O}) and a predetermined negative deviation (ΔZ₋), with this impedance reference manipulated variable (Z_{O}) being selected from the generated impedance manipulated variables (Z_{y1}, Z_{y2}, Z_{y3}) in such a way that the impedance reference manipulated variable (Z_{O}) on the one hand is greater than or equal to the smallest and on the other hand is less than or equal to the greatest generated impedance manipulated variable (Z_{y1}, Z_{y2}, ^{Z}y3^{).}

2. Device for carrying out the method for limiting cases of unsymmetry with impedance manipulated variables (Z_{y1}, Z_{y2}, Z_{y3}) of a controlled series compensation system (2), generated in dependence upon conduction currents (i_{L2}, i_{L2}, i_{L3}) and a desired conduction-current value (i_{LS}) by means of current controllers (52, 54, 56), in an electrical system (6) according to claim 1, with each impedance manipulated variable (Z_{Y1}, Z_{Y2}, Z_{Y3}) being supplied by means of a characteristic transmitter (64, 66, 68) as ignition angle signal (S_{αS1}, S_{αS2}, S_{αS3}) to a set of trigger equipment (40, 42, 44), with each impedance manipulated variable (Z_{y1}, Z_{y2}, Z_{y3}) being supplied by way of a limiter (58, 60, 62) to a characteristic transmitter (64, 66, 68), with further limiter inputs of the limiters (58, 60, 62) in each case being connected to a respective output of a device (72) to determine an upper and lower limiting value (Z_{OO}, Z_{OU}), at the region inputs of which a positive and negative predetermined deviation (ΔZ₊, ΔZ₋) is present, and with a signal input of this device (72) being connected to an output of a selection device (70), at the inputs of which in each case there is an impedance manipulated variable ^{(Z}y1^{, Z}y2^{, Z}y3^{).}

3. Device according to claim 2, with the selection device (70) consisting on the input side of three maximum selection circuits (74, 76, 78) and on the output side of two minimum selection circuits (80, 82), with there being supplied to the first maximum selection circuit (74) a first and a second impedance manipulated variable (Z_{y1}, Z_{y2}), to the second maximum selection circuit (76) a second and a third impedance manipulated variable (Z_{y2}, Z_{y3}) and to the third maximum selection circuit (78) a third and a first impedance manipulated variable (Z_{y3}, Z_{Y1}), with the outputs of the first and second maximum selection circuit (74, 76) being connected on the input side to the first minimum selection circuit (80), the output of which is connected like the output of the third maximum selection circuit (78) on the input side to the second minimum selection circuit (82).

4. Device according to claim 2, with the device (4) for generating ignition signals (S_{αS1}, S_{αS2}, S_{αS3}) from the conduction currents (i_{L2}, i_{L2}, i_{L3}) and a desired conduction-current value (i_{LS}) being a microcomputer.

## Revendications

1. Procédé de limitation des dissymétries dans des grandeurs réglantes d'impédance (Z_{y1}, Z_{y2}, Z_{y3}), produites en fonction de courants de conducteurs (i_{L1}, i_{L2}, i_{L3}) et d'une valeur de consigne (i_{LS}) de courant des conducteurs, d'une installation (2) de compensation série commandée dans un réseau électrique (6), dans lequel on envoie les grandeurs réglantes d'impédance comme signaux (S_{αS1}, S_{αS2}, S_{αS3}) d'angle d'amorçage à un organe de commande (40, 42, 44), on limite chaque grandeur réglante d'impédance (Z_{y1}, Z_{y2}, Z_{y3}) au moyen d'une limite supérieure et d'une limite inférieure (Z₀₀, Z_{0U}), on détermine la valeur limite supérieure (Z₀₀) par addition d'une grandeur réglante (Z_{O}) de référence d'impédance et d'un écart (ΔZ₊) positif prescrit et la valeur limite inférieure (Z_{OU}) en soustrayant de cette grandeur réglante (Z_{O}) de référence d'impédance un écart (ΔZ₋) négatif prescrit, on sélectionne cette grandeur réglante (Z_{O}) de référence d'impédance parmi les grandeurs réglantes d'impédances produites (Z_{y1}, Z_{y2}, Z_{y3}) de telle sorte que d'une part la grandeur réglante (Z_{O}) de référence d'impédance soit supérieure ou égale à la plus petite grandeur réglante d'impédance produite (Z_{y1}, Z_{y2}, Z_{y3}) et d'autre part inférieure ou égale à la plus grande grandeur réglante d'impédance produite (Z_{y1}, Z_{y2}, Z_{y3}).

2. Dispositif destiné à la mise en oeuvre du procédé de limitation des dissymétries dans des grandeurs réglantes (Z_{y1}, Z_{y2}, Z_{y3}) d'impédances produites en fonction de courants (i_{L1}, i_{L2}, i_{L3}) de conducteurs et d'une valeur de consigne (i_{LS}) de courant des conducteurs au moyen de régulateurs de courant (52, 54, 56), d'une installation (2) de compensation série commandée dans un réseau électrique (6) suivant la revendication 1, dans lequel chaque grandeur réglante d'impédance (Z_{y1}, Z_{y2}, Z_{y3}) est envoyée au moyen d'un générateur de caractéristiques (64, 66, 68) comme signal (S_{αS1}, S_{αS2}, S_{αS3}) d'angle d'amorçage à un organe (40, 42, 44) de commande, chaque grandeur réglante (Z_{y1}, Z_{y2}, Z_{y3}) d'impédance étant envoyée par l'intermédiaire d'un limiteur (58, 60, 62) à un générateur de caractéristiques (64, 66, 68), d'autres entrées du limiteur (58, 60, 62) étant reliées chacune à une sortie d'un dispositif (72), qui est destiné à calculer une valeur limite supérieure et une valeur limite inférieure (Z_{OO}, Z_{OU}) et aux entrées de domaine duquel un écart positif prescrit et un écart négatif prescrit (ΔZ₊, ΔZ₋) sont appliqués et une entrée de signal de ce dispositif (72) étant reliée à une sortie d'un dispositif (70) de sélection, à chacune des entrées duquel est appliquée une grandeur réglante d'impédance (Z_{y1}, Z_{y2}, Z_{y3}).

3. Dispositif suivant la revendication 2, dans lequel le dispositif (70) de sélection est constitué côté entrée de trois circuits (74, 76, 78) de sélection de maximum et côté sortie de deux circuits (80, 82) de sélection de minimum, une première et une seconde grandeur réglante d'impédance (Z_{y1}, Z_{y2}) étant envoyées au premier circuit (74) de sélection de maximum, une seconde et une troisième grandeur réglante (Z_{y2}, Z_{y3}) d'impédance étant envoyée au second circuit (76) de sélection de maximum et une troisième et une première grandeur réglante (Z_{y3}, Z_{y1}) d'impédance étant envoyée au troisième circuit (78) de sélection de maximum, les sorties des premier et second circuits de sélection de maximum (74, 76) étant reliées côté entrée aux entrées au premier circuit (80) de sélection de minimum, dont la sortie est reliée, comme la sortie du troisième circuit (78) de sélection de maximum au côté entrée du second circuit (82) de sélection de minimum.

4. Dispositif suivant la revendication 2, dans lequel le dispositif (4) de production de signaux d'amorçage (S_{αS1}, S_{αS2}, S_{αS3}) à partir des courants des conducteurs (i_{L1}, i_{L2}, i_{L3}) et d'une valeur de consigne (i_{LS}) des courants des conducteurs est un micro-ordinateur.
